# FASCICULE DE BREVET EUROPEEN

(11) **EP 2 276 814 B1**
(45) Date de publication et mention de la délivrance du brevet: **04.07.2012**
(21) Numéro de dépôt: 09746136.2
(22) Date de dépôt: 29.04.2009
(51) Int. Cl.: C09D 5/02, C09D 7/00, C09D 7/02, C09D 7/12, B01F 17/00, C09D 167/08

(54) **UTILISATION D'UN COUPLE DISPERSANT ACRYLIQUE-ÉPAISSISSANT ASSOCIATIF DANS UNE PEINTURE ALKYDE POUR AMÉLIORER LA RÉTENTION DU NIVEAU DE BRILLANT**
VERWENDUNG EINES ACRYLDISPERSIONSMITTELS/ZUGEHÖRIGEN VERDICKUNGSMITTEL IN EINEM ALKYDLACK FÜR ERHÖHTE GLANZHALTUNG
USE OF AN ACRYLIC DISPERSANT/ASSOCIATIVE THICKENER PAIRING IN AN ALKYD PAINT FOR ENHANCING THE GLOSS RETENTION

(30) Priorité: 14.05.2008 FR 0802601
(43) Date de publication de la demande: 26.01.2011
(73) Titulaire: COATEX S.A.S., 69730 Genay (FR)
(72) Inventeur: RUHLMANN, Denis, F-69730 Genay (FR); SUAU, Jean-Marc, F-69480 Lucenay (FR)
(74) Mandataire: Tetaz, Franck Claude Edouard
(86) Numéro de dépôt international: PCT/IB2009/005522
(87) Numéro de publication internationale: WO 2009/138840

(56) Documents cités:
- WO-A-2004/045755
- FR-A- 2 826 014
- US-A1- 2005 085 563

## Description

De manière très générale, une peinture aqueuse est constituée d'eau, d'un pigment minéral ou organique, et d'un liant polymère assurant au final la cohésion entre l'ensemble des constituants de ladite peinture. Il est bien connu que la brillance du film de peinture sec final résulte d'un bon état de dispersion du pigment : à ce titre, l'homme du métier a développé des additifs qui portent le nom de « dispersants » et dont la fonction est d'assurer une bonne mise en dispersion du pigment. Parallèlement, la peinture contient aussi des additifs dont le rôle est de conférer au milieu la viscosité adéquate pour sa stabilité en pot, son transport, le chargement de l'outil et son application : il s'agit de modificateurs de rhéologie ou épaississants.

Parmi ces épaississants, l'homme du métier connaît depuis de nombreuses années la catégorie particulière des épaississants dits « associatifs », au sens où ils disposent d'au moins un monomère hydrophobe susceptible de développer des interactions dites associatives et d'épaissir ainsi le milieu dans lequel ils sont introduits. Ces structures ont été largement décrites dans la littérature, notamment par J.E. Glass et al.; e.g. (I) J. Oil, Color Chemists Assn. (1984), 67(10), 256; (II) ibid (1984), 67 (11), 279; (III) ibid (1986), 69(10), 263; (IV) ibid (1988), 71(10), 315; (V) Prog. Org. Coatings (1989), 17, 155-173.).

Toujours selon un angle très général, il est bien connu que les dispersants et les épaississants (notamment de type associatif) peuvent développer au sein de la peinture des interactions complexes (voir le document WO 93 09187), de même que lesdits épaississants associatifs peuvent interagir avec d'éventuels tensio-actifs (voir le document EP 0 905 1571), ce qui peut conduire à une dégradation des propriétés de ladite peinture, telles que notamment sa rhéologie et sa brillance.

Ce préambule pose le problème général et classique du choix d'un système dispersant-épaississant (associatif) pour l'homme du métier qui veut à la fois augmenter la brillance de sa peinture, tout en ajustant sa rhéologie. Cette problématique est exacerbée dans le cas très particulier des peintures aqueuses visées dans la présente Demande, de même qu'à travers les propriétés tout à fait spécifiques qui font l'objet du problème technique de cette même Demande.

Parmi les différentes catégories de peintures en phase aqueuse, il en est une qui revêt aujourd'hui une importance toute particulière : il s'agit des « peintures alkydes ». Ce terme renvoie soit à des polyesters résultant de la réaction d'acides organiques avec des polyols, soit à des alkydes dits alkydes-uréthannes résultant de la condensation de polyols avec des fonctions isocyanates. Historiquement, les peintures alkydes ont été fabriquées en présence de solvants organiques, qui constituaient l'essentiel de la phase au sein de laquelle était dispersée la résine alkyde. Aujourd'hui, la législation internationale en matière de rejet de composés organiques volatils (Sbornik Prispevku - Mezinarodni Konference - Naterovich Homtach - 37th - Rp. Tch., 22-24 mai 2006, 92-104) oblige l'homme du métier à se tourner vers des peintures alkydes en phase aqueuse.

Pour ce faire, on a recours à des tensio-actifs dont la fonction est de disperser ladite résine alkyde en présence d'eau ; on utilise aussi des solvants organiques, mais dans une moins large mesure qu'auparavant, également pour faciliter la dispersion de la résine dans la phase aqueuse. On est donc en présence de systèmes complexes, où la présence de tensio-actifs mais aussi de solvants organiques constitue un premier obstacle à l'identification d'un couple optimal dispersant / épaississant associatif.

De plus, dans le cadre de ces systèmes alkydes en phase aqueuse, si l'obtention d'un niveau de brillant élevé est une exigence importante, le maintien de ce niveau au cours du vieillissement du film fait aussi partie du cahier des charges de l'homme du métier. De manière encore plus contraignante, c'est le maintien du niveau de brillant du film, en fonction du moment d'application de la peinture, qui constitue l'exigence majeure pour l'homme du métier. En effet, cette contrainte reflète la réalité de la mise en oeuvre industrielle d'une peinture. Celle-ci est formulée, sans pour autant être destinée à être appliquée immédiatement : cependant, que la peinture soit appliquée immédiatement, ou après plusieurs semaines de stockage, le film sec résultant doit présenter le même niveau de brillant. On désignera ce comportement sous le terme de « rétention du niveau de brillant ».

Enfin, la peinture alkyde en phase aqueuse ainsi formulée doit prendre en compte le comportement rhéologique souhaité par l'homme du métier. Ce comportement est reflété par une valeur de viscosité Brookfield™, mesurée à 10 tours / minute et à 25°C, comprise entre 4 000 mPa.s et 10 000 mPa.s. Cet intervalle correspond à un compromis permettant d'éviter les phénomènes de séparation de phase, de surnageant ou de synérèse (à viscosité trop faible), tout en assurant un bon garnissage de l'outil d'application, un excellent étalement ou un tendu optimal au niveau du film (propriétés dégradées si la viscosité est trop importante).

Aussi, le problème technique objet de la présente Demande s'apparente-il à la recherche d'un couple dispersant / épaississant, pour des systèmes complexes mettant en jeu des tensio-actifs et des solvants organiques que sont les formulations alkydes en phase aqueuse, afin d'améliorer la propriété de rétention du niveau de brillant. Obtenir un niveau de brillant élevé immédiatement après application, et maintenir ce niveau pour le film de peinture sec au cours de son vieillissement et du vieillissement de la peinture, fait aussi partie du problème technique de la présente invention. Proposer une formulation alkyde en phase aqueuse dont la viscosité Brookfield™, mesurée à 10 tours / minute et à 25°C, est comprise entre 4 000 mPa.s et 10 000 mPa.s, constitue la dernière partie dudit problème technique.

Cherchant à résoudre ce problème, la Demanderesse a mis au point l'utilisation dans une formulation de résine alkyde en phase aqueuse, comme agent améliorant la rétention du niveau de brillant du film sec résultant de l'application de ladite formulation, d'un couple dispersant / épaississant, caractérisé en ce que :
- le dispersant est un copolymère de l'acide (méth)acrylique avec un monomère oxyalkylé possédant une fonction polymérisable et terminé par l'hydrogène ou un groupement alkyle ayant de 1 à 4 atomes de carbone,
- l'épaississant est un épaississant associatif contenant au moins un groupement hydrophobe qui est un polystyrylphényle, préférentiellement choisi parmi le distyrylphényle, le tristyrylphényle et leurs mélanges, et qui est très préférentiellement le tristyrylphényle.

De manière tout à fait étonnante, c'est la combinaison de ce dispersant et de cet épaississant qui conduit à une amélioration de la rétention du niveau de brillant pour le film sec de peinture, tout en conférant à la formulation de peinture la rhéologie souhaitée (pas de séparation de phase, pas de surnageant ni de synérèse, bon garnissage de l'outil, bon étalement et tendu satisfaisant au niveau de l'application).

On rappelle que les structures suivantes (1) et (2) désignent respectivement le distyrylphényle et le tristyrylphényle :

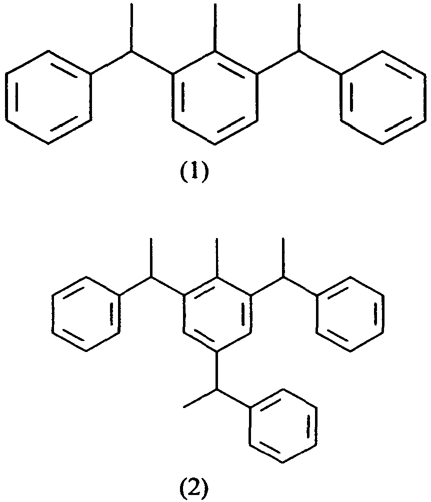

De telles structures sont déjà connues de l'homme du métier comme étant mises en oeuvre pour des épaississants associatifs, dans les documents EP 1 425 325 pour améliorer la compatibilité pigmentaire, EP 0 705 852 et EP 0 705 854 pour fabriquer des modificateurs de rhéologie efficaces à faible dose, EP 1 806 386 pour maintenir une bonne viscosité en présence d'une quantité importante de pigments (ce qui avait déjà été divulgué dans le document EP 1 425 325).

Aussi, rien ne divulgue dans la littérature que des épaississants associatifs, mettant en oeuvre les groupements précités, et en association avec des dispersants qui sont des copolymères de l'acide (méth)acrylique avec un monomère oxyalkylé, constituent des agents améliorant la rétention du niveau de brillant. Un des mérites de la Demanderesse est d'avoir su identifier, parmi la multitude de dispersants et d'épaississants associatifs disponibles, ceux dont l'association conduisait à une amélioration de la rhéologie et de la rétention du niveau de brillant selon le cahier des charges envisagé. Ce mérite est d'autant plus grand que les formulations considérées sont des peintures alkydes en phase aqueuse, contenant des tensio-actifs et des solvants organiques, dont on sait les interactions néfastes qu'ils peuvent développer avec les épaississants associatifs.

Aussi, un premier objet de l'invention est l'utilisation, dans une formulation de résine alkyde en phase aqueuse, comme agent améliorant la rétention du niveau de brillant du film sec résultant de l'application de ladite formulation, d'un couple dispersant /épaississant, caractérisé en ce que :
- le dispersant est un copolymère de l'acide (méth)acrylique avec un monomère oxyalkylé possédant une fonction polymérisable et terminé par l'hydrogène ou un groupement alkyle ayant de 1 à 4 atomes de carbone,
- l'épaississant est un épaississant associatif contenant au moins un groupement hydrophobe qui est un polystyrylphényle, préférentiellement choisi parmi le distyrylphényle, le tristyrylphényle et leurs mélanges, et qui est très préférentiellement le tristyrylphényle.

Cette utilisation est aussi caractérisée en ce que ledit dispersant est un copolymère de l'acide acrylique avec un monomère oxyalkylé possédant une fonction polymérisable et terminé par l'hydrogène ou un groupement alkyle ayant de 1 à 4 atomes de carbone.

Cette utilisation est aussi caractérisée en ce que pour ledit dispersant, le monomère oxyalkylé possède de 5 à 150, préférentiellement de 10 à 115 nombre d'oxyde d'éthylène et/ou de propylène.

Cette utilisation est aussi caractérisée en ce que pour ledit dispersant, le monomère oxyalkylé est terminé par l'hydrogène ou le groupement méthyle.

Cette utilisation est aussi caractérisée en ce que pour ledit dispersant, la fonction polymérisable du monomère oxyalkylé est la fonction méthacrylate.

Cette utilisation est aussi caractérisée en ce que ledit dispersant présente un poids moléculaire compris entre 15 000 g/mol et 110 000 g/mol, préférentiellement entre 20 000 g/mol et 60 000 g/mol.

Cette utilisation est aussi caractérisée en ce que l'épaississant associatif contenant au moins un groupement hydrophobe qui est le distyrylphényle, le tristyrylphényle ou un mélange de distyrylphényle et de tristyrylphényle, possède la formule (I) :

R - OX₁ - V - (OX₂ - W)ₐ - OX₃ - R, avec :

- V et W désignent une liaison uréthane,
- a désigne un nombre réel compris entre 1 et 5,
- OX₁, OX₂ et OX₃ désignent des groupements oxyalkylés, à base d'oxyde d'éthylène et/ou de propylène,
- R désigne un groupement hydrophobe qui est un polystyrylphényle, préférentiellement choisi parmi le distyrylphényle, le tristyrylphényle et leurs mélanges, et qui est très préférentiellement le tristyrylphényle.

Cette utilisation est aussi caractérisée en ce que, pour l'épaississant associatif, le nombre de motifs d'oxyde d'éthylène et/ou de propylène dans les groupements OX₁ et OX₃ est compris entre 2 et 100.

Cette utilisation est aussi caractérisée en ce que, pour l'épaississant associatif, le nombre de motifs d'oxyde d'éthylène et/ou de propylène pour le groupement OX₂ est compris entre 100 et 500.

Cette utilisation est aussi caractérisée en ce que, pour l'épaississant associatif, R désigne un groupement hydrophobe qui est le tristyrylphényle.

Cette utilisation est aussi caractérisée en ce que l'épaississant associatif présente un poids moléculaire compris entre 5 000 g/mol et 80 000 g/mol, préférentiellement entre 5 000 g/mol et 40 000 g/mol.

Cette utilisation est aussi caractérisée en ce que la résine alkyde est choisie parmi les résines polyesters, polyuréthannes, polyuréthannes-polyesters et leurs mélanges.

Cette utilisation est aussi caractérisée en ce que la formulation de résine alkyde en phase aqueuse présente une viscosité Brookfield™, mesurée à 25°C et à 10 tours / minute, comprise entre 4 000 et 10 000 mPa.s.

Cette utilisation est aussi caractérisée en ce que la formulation de résine alkyde en phase aqueuse est une peinture, une laque, un vernis ou une lasure.

Un autre objet de l'invention consiste en une formulation de résine alkyde en phase aqueuse, contenant comme agent améliorant la rétention du niveau de brillant du film sec résultant de l'application de ladite formulation, un couple dispersant / épaississant, caractérisé en ce que :
- le dispersant est un copolymère de l'acide (méth)acrylique avec un monomère oxyalkylé possédant une fonction polymérisable et terminé par l'hydrogène ou un groupement alkyle ayant de 1 à 4 atomes de carbone,
- l'épaississant est un épaississant associatif contenant au moins un groupement hydrophobe qui est un polystyrylphényle, préférentiellement choisi parmi le distyrylphényle, le tristyrylphényle et leurs mélanges, et qui est très préférentiellement le tristyrylphényle.

Cette formulation de résine alkyde en phase aqueuse contenant un couple dispersant /épaississant, est aussi caractérisée en ce que ledit dispersant est un copolymère de l'acide acrylique avec un monomère oxyalkylé possédant une fonction polymérisable et terminé par l'hydrogène ou un groupement alkyle ayant de 1 à 4 atomes de carbone.

Cette formulation de résine alkyde en phase aqueuse contenant un couple dispersant /épaississant, est aussi caractérisée en ce que pour ledit dispersant, le monomère oxyalkylé possède de 5 à 150, préférentiellement de 10 à 115 nombre d'oxyde d'éthylène et/ou de propylène.

Cette formulation de résine alkyde en phase aqueuse contenant un couple dispersant /épaississant, est aussi caractérisée en ce que pour ledit dispersant, le monomère oxyalkylé est terminé par l'hydrogène ou le groupement méthyle.

Cette formulation de résine alkyde en phase aqueuse contenant un couple dispersant /épaississant, est aussi caractérisée en ce que pour ledit dispersant, la fonction polymérisable du monomère oxyalkylé est la fonction méthacrylate.

Cette formulation de résine alkyde en phase aqueuse contenant un couple dispersant /épaississant est aussi caractérisée en ce que, ledit dispersant présente un poids moléculaire compris entre 15 000 g/mol et 110 000 g/mol, préférentiellement entre 20 000 g/mol et 60 000 g/mol.

Cette formulation de résine alkyde en phase aqueuse contenant un couple dispersant /épaississant est aussi caractérisée en ce que ledit épaississant possède la formule (I) :

R - OX₁ - V - (OX₂ - W)ₐ - OX₃ - R, avec :

- V et W désignent une liaison uréthane,
- a désigne un nombre réel compris entre 1 et 5,
- OX₁, OX₂ et OX₃ désignent des groupements oxyalkylés, à base d'oxyde d'éthylène et/ou de propylène,
- R désigne un groupement hydrophobe qui est un polystyrylphényle, préférentiellement choisi parmi le distyrylphényle, le tristyrylphényle et leurs mélanges, et qui est très préférentiellement le tristyrylphényle.

Cette formulation de résine alkyde en phase aqueuse contenant un couple dispersant /épaississant est aussi caractérisée en ce que, pour l'épaississant associatif, le nombre de motifs d'oxyde d'éthylène et/ou de propylène dans les groupements OX₁ et OX₃ est compris entre 2 et 100.

Cette formulation de résine alkyde en phase aqueuse est aussi caractérisée en ce que, pour l'épaississant associatif, le nombre de motifs d'oxyde d'éthylène et/ou de propylène pour le groupement OX₂ est compris entre 100 et 500.

Cette formulation de résine alkyde en phase aqueuse est aussi caractérisée en ce que, pour l'épaississant associatif, R désigne un groupement hydrophobe qui est le tristyrylphényle.

Cette formulation de résine alkyde en phase aqueuse est aussi caractérisée en ce que l'épaississant associatif présente un poids moléculaire compris entre 5 000 g/mol et 80 000 g/mol, préférentiellement entre 5 000 g/mol et 40 000 g/mol.

Cette formulation de résine alkyde en phase aqueuse est aussi caractérisée en ce que la résine alkyde est choisie parmi les résines polyesters, polyuréthannes, polyuréthannes-polyesters et leurs mélanges.

Cette formulation de résine alkyde en phase aqueuse est aussi caractérisée en ce qu'elle présente une viscosité Brookfield™, mesurée à 25°C et à 10 tours / minute, comprise entre 4 000 et 10 000 mPa.s.

Cette formulation de résine alkyde en phase aqueuse est aussi caractérisée en ce qu'elle est une peinture, une laque, un vernis ou une lasure.

### EXEMPLES

Dans chacun des essais suivants, on a commencé par réaliser une peinture par mélange, selon le savoir-faire de l'homme du métier, de différents constituants dans les proportions telles que données dans le tableau 1.

**Tableau 1**

| **Constituants** | **Fonction (Producteur)** | **Quantité (g)** |
|---|---|---|
| Eau | - | 54,4 |
| Acticide MBS | Bactéricide (THOR™) | 2 |
| Tego Foamex 815 N | Antimousse (TEGO CHEMIE™) | 2 |
| AMP 90 | Neutralisant (ANGUS™) | 0,5 |
| Tiona 595 | Dioxyde de titane (MILLENIUM™) | 265 |
| Synaqua 2080 | Liant (CRAY VALLEY™) | 630 |
| Durham Cobalt 10WM | Siccatif (ELEMENTIS™) | 3,1 |

Pour chacune des peintures correspondant aux essais n° 1 à 19, on a mis en oeuvre un certain système dispersant / épaississant associatif.

### Essai n° 1

Cet essai illustre un couple dispersant / épaississant hors invention, et met en oeuvre :
- 8 grammes d'un dispersant acrylique D1, qui est un homopolymère de l'acide acrylique de poids moléculaire environ 11 000 g/mol, totalement neutralisé par la soude,
- 30 grammes d'un épaississant associatif de poids moléculaire environ 11 000 g/mol et de formule (I), avec :
   - V et W désignent une liaison uréthane,
   - OX₁ et OX₃ désignent un groupement constitué de 8 motifs oxyde d'éthylène,
   - a est égal à 1,1,
   - OX₂ désigne un groupement constitué de 225 motifs oxyde d'éthylène,
   - R désigne le groupement alkyle hydrophobe ramifié ayant 8 atomes de carbone.

### Essai n° 2

Cet essai illustre un couple dispersant / épaississant hors invention, et met en oeuvre :
- 8 grammes d'un dispersant acrylique noté D1,
- 30 grammes d'un épaississant associatif de poids moléculaire environ 24 300 g/mol et de formule (I), avec :
   - V et W désignent une liaison uréthane,
   - OX₁ et OX₃ désignent un groupement constitué de 25 motifs oxyde d'éthylène,
   - a est égal à 2,1,
   - OX₂ désigne un groupement constitué de 225 motifs oxyde d'éthylène,
   - R désigne le groupement tristyrylphényl.

### Essai n° 3

Cet essai illustre un couple dispersant / épaississant hors invention, et met en oeuvre :
- 8 grammes d'un dispersant acrylique noté D2, qui est un copolymère de l'acide acrylique et de l'acrylate de butyle (ratio massique 70:30) de poids moléculaire environ 9 500 g/mol et totalement neutralisé par l'hydroxyde de potassium,
- 30 grammes d'un épaississant associatif de poids moléculaire environ 11 000 g/mol et de formule (I), avec :
   - V et W désignent une liaison uréthane,
   - OX₁ et OX₃ désignent un groupement constitué de 8 motifs oxyde d'éthylène,
   - a est égal à 1,1,
   - OX₂ désigne un groupement constitué de 225 motifs oxyde d'éthylène,
   - R désigne le groupement alkyle hydrophobe ramifié ayant 8 atomes de carbone.

### Essai n° 4

Cet essai illustre un couple dispersant / épaississant hors invention, et met en oeuvre :
- 8 grammes d'un dispersant acrylique noté D2,
- 30 grammes d'un épaississant associatif de poids moléculaire environ 24 300 g/mol et de formule (I), avec :
   - V et W désignent une liaison uréthane,
   - OX₁ et OX₃ désignent un groupement constitué de 25 motifs oxyde d'éthylène,
   - a est égal à 2,1,
   - OX₂ désigne un groupement constitué de 225 motifs oxyde d'éthylène,
   - R désigne le groupement tristyrylphényl.

### Essai n° 5

Cet essai illustre un couple dispersant / épaississant hors invention, et met en oeuvre :
- 8 grammes d'un dispersant acrylique D3 de poids moléculaire environ 38 500 g/mol et constitué de, exprimé en % en poids :
   - 13,75 % d'acide acrylique,
   - 4,75 % d'acide méthacrylique,
   - 81,5 % de méthacrylate de méthoxy polyéthylène glycol de poids moléculaire égal à environ 2 000 g/mol.
- 30 grammes d'un épaississant associatif commercialisé par la société AQUALON™ sous le nom Aquaflow™ NHS-300.

### Essai n° 6

Cet essai illustre un couple dispersant / épaississant hors invention, et met en oeuvre :
- 8 grammes d'un dispersant acrylique noté D3,
- 30 grammes d'un épaississant associatif commercialisé par la société AQUALON™ sous le nom Aquaflow™ NHS-300 et 3 grammes d'un épaississant associatif commercialisé par la société AQUALON™ sous le nom Aquaflow™ NLS-205.

### Essai n° 7

Cet essai illustre un couple dispersant / épaississant hors invention, et met en oeuvre :
- 8 grammes du dispersant acrylique noté D3,
- 30 grammes d'un épaississant associatif tel que mis en oeuvre dans l'essai n° 1.

### Essai n° 8

Cet essai illustre un couple dispersant / épaississant hors invention, et met en oeuvre :
- 8 grammes du dispersant acrylique noté D3,
- 30 grammes d'un épaississant associatif de poids moléculaire environ 12 000 g/mol de formule (I), avec :
   - V et W désignent une liaison uréthane,
   - OX₁ et OX₃ désignent un groupement constitué de 25 motifs oxyde d'éthylène,
   - a est égal à 2,1,
   - OX₂ désigne un groupement constitué de 225 motifs oxyde d'éthylène,
   - R désigne le groupement alkyle hydrophobe ayant 12 atomes de carbone.

### Essai n° 9

Cet essai illustre un couple dispersant / épaississant hors invention, et met en oeuvre :
- 8 grammes du dispersant acrylique noté D3,
- 30 grammes d'un épaississant associatif de poids moléculaire environ 11 500 g/mol et de formule (I), avec :
   - V et W désignent une liaison uréthane,
   - OX₁ et OX₃ désignent un groupement constitué de 6 motifs oxyde d'éthylène,
   - a est égal à 1,1,
   - OX₂ désigne un groupement constitué de 225 motifs oxyde d'éthylène,
   - R désigne un mélange de groupements alkyles hydrophobes ayant de 8 à 16 atomes de carbone.

### Essai n° 10

Cet essai illustre un couple dispersant / épaississant hors invention, et met en oeuvre :
- 8 grammes du dispersant acrylique noté D3,
- 30 grammes d'un épaississant associatif de poids moléculaire environ 24 000 g/mol de formule (I), avec :
   - V et W désignent une liaison uréthane,
   - OX₁ et OX₃ désignent un groupement constitué de 25 motifs oxyde d'éthylène,
   - a est égal à 2,1,
   - OX₂ désigne un groupement constitué de 225 motifs oxyde d'éthylène,
   - R désigne un groupement alkyle hydrophobe ayant 20 atomes de carbone.

### Essai n° 11

Cet essai illustre un couple dispersant / épaississant hors invention, et met en oeuvre :
- 8 grammes du dispersant acrylique noté D3,
- 30 grammes d'un épaississant associatif de poids moléculaire environ 23 000 g/mol de formule (I), avec :
   - V et W désignent une liaison uréthane,
   - OX₁ et OX₃ désignent un groupement constitué de 25 motifs oxyde d'éthylène,
   - a est égal à 2,1,
   - OX₂ désigne un groupement constitué de 225 motifs oxyde d'éthylène,
   - R désigne un groupement alkyle hydrophobe ayant 22 atomes de carbone.

### Essai n° 12

Cet essai illustre un couple dispersant / épaississant hors invention, et met en oeuvre :
- 8 grammes du dispersant acrylique noté D3,
- 30 grammes d'un épaississant associatif de poids moléculaire environ 24 000 g/mol de formule (I), avec :
   - V et W désignent une liaison uréthane,
   - OX₁ et OX₃ désignent un groupement constitué de 25 motifs oxyde d'éthylène,
   - a est égal à 2,1,
   - OX₂ désigne un groupement constitué de 225 motifs oxyde d'éthylène,
   - R désigne un groupement alkyle hydrophobe ramifié ayant 28 atomes de carbone.

### Essai n° 13

Cet essai illustre l'invention et met en oeuvre :
- 8 grammes du dispersant acrylique noté D3,
- 30 grammes d'un épaississant associatif tel que décrit dans l'essai n° 2.

### Essai n° 14

Cet essai illustre un couple dispersant / épaississant hors invention, et met en oeuvre :
- 8 grammes d'un dispersant acrylique D4 de poids moléculaire environ 28 000 g/mol et constitué de, exprimé en % en grammes :
   - 13,88 % d'acide acrylique,
   - 1,70 % d'acide méthacrylique,
   - 84,42 % de méthacrylate de méthoxy polyéthylène glycol de poids moléculaire égal à environ 2 000 g/mol,
- 30 grammes d'un épaississant associatif commercialisé par la société AQUALON™ sous le nom Aquaflow™ NHS-300 et 3 grammes d'un épaississant associatif commercialisé par la société AQUALON™ sous le nom Aquaflow™ NLS-205.

### Essai n° 15

Cet essai illustre un couple dispersant / épaississant hors invention, et met en oeuvre :
- 8 grammes du dispersant acrylique noté D4,
- 30 grammes d'un épaississant associatif tel que mis en oeuvre selon l'essai n° 8.

### Essai n° 16

Cet essai illustre un couple dispersant / épaississant hors invention, et met en oeuvre :
- 8 grammes du dispersant acrylique noté D4,
- 30 grammes d'un épaississant associatif tel que mis en oeuvre selon l'essai n° 12.

### Essai n° 17

Cet essai illustre un couple dispersant / épaississant selon l'invention, et met en oeuvre :
- 8 grammes du dispersant acrylique noté D4,
- 30 grammes d'un épaississant associatif de poids moléculaire environ 26 000 g/mol et de formule (I), avec :
   - V et W désignent une liaison uréthane,
   - OX₁ et OX₃ désignent un groupement constitué de 60 motifs oxyde d'éthylène,
   - a est égal à 2,2,
   - OX₂ désigne un groupement constitué de 225 motifs oxyde d'éthylène,
   - R désigne le groupement tristyrylphényle.

### Essai n° 18

Cet essai illustre un couple dispersant / épaississant selon l'invention, et met en oeuvre :
- 8 grammes du dispersant acrylique noté D4,
- 60 grammes d'un épaississant associatif de poids moléculaire environ 26 000 g/mol et de formule (I), avec :
   - V et W désignent une liaison uréthane,
   - OX₁ et OX₃ désignent un groupement constitué de 60 motifs oxyde d'éthylène,
   - a est égal à 2,2,
   - OX₂ désigne un groupement constitué de 225 motifs oxyde d'éthylène,
   - R désigne le groupement tristyrylphényle.

### Essai n° 19

Cet essai illustre un couple dispersant / épaississant selon l'invention, et met en oeuvre :
- 8 grammes du dispersant acrylique noté D4,
- 70 grammes d'un épaississant associatif de poids moléculaire environ 26 000 g/mol et de formule (I), avec :
   - V et W désignent une liaison uréthane,
   - OX₁ et OX₃ désignent un groupement constitué de 60 motifs oxyde d'éthylène,
   - a est égal à 2,2,
   - OX₂ désigne un groupement constitué de 225 motifs oxyde d'éthylène,
   - R désigne le groupement tristyrylphényle.

Pour chacun des essais n° 1 à 19, on a mesuré les viscosités Brookfield™, à 10 tours /minute et à 25°C, à 24 heures, 10 jours, 1 mois et 3 mois après la formulation de la peinture (voir tableau 1).

On a également déterminé la brillance à 20° (avec un réflectomètre Micro-Tri-Gloss™ commercialisé par la société BYK GARDNER™ selon la norme NF T 30-064), 1 jour, mois et 3 mois après application de la peinture, cette peinture ayant été appliquée semaine, 1 mois, ou 3 mois après avoir été formulée (voir tableau 2 page suivante).

**Tableau 1**

| Essai | AA/IN | Disp. | Epaississant | | Viscosité (mPa.s) | | |
|---|---|---|---|---|---|---|---|
| | | | R | OX1 | 24H | 10J | 1M |
| 1 | AA | D1 | C8 | 8 OE | 15200 | 16000 | 16200 |
| 2 | AA | D1 | TSP | 25 OE | 11200 | 11800 | 12100 |
| 3 | AA | D2 | C8 ramifié | 8 OE | 15200 | 15800 | 16200 |
| 4 | AA | D2 | TSP | 25 OE | 10200 | 11000 | 11200 |
| 5 | AA | D3 | Aquaflow NHS 300 | | 1900 | 1700 | 1400 |
| 6 | AA | D3 | Aquaflow NHS 300 | | 2700 | 2500 | 2100 |
| | | | Aquaflow NLS 205 | | | | |
| 7 | AA | D3 | C8 | 8 OE | 10400 | 11700 | 11600 |
| 8 | AA | D3 | C12 | 25 OE | 32000 | 31500 | 32500 |
| 9 | AA | D3 | C8-C16 | 6 OE | 34200 | 34300 | 33900 |
| 10 | AA | D3 | C20 | 25 OE | 51400 | 52000 | 52500 |
| 11 | AA | D3 | C22 | 25 OE | 55500 | 56000 | 57200 |
| 12 | AA | D3 | C28 | 25 OE | - | - | - |
| **13** | **IN** | **D3** | **TSP** | **25 OE** | **9000** | **9700** | **9300** |
| 14 | AA | D4 | Aquaflow NHS 300 | | 2200 | 1900 | 1500 |
| | | | Aquaflow NLS 205 | | | | |
| 15 | AA | D4 | C12 | 25 OE | 32500 | 33 500 | 32400 |
| 16 | AA | D4 | C28 | 25 OE | - | - | - |
| **17** | **IN** | **D4** | **TSP** | **60 OE** | **7000** | **6200** | **5500** |
| **18** | **IN** | **D4** | **TSP** | **60 OE** | **7100** | **6300** | **5600** |
| **19** | **IN** | **D4** | **TSP** | **60 OE** | **7200** | **6400** | **5600** |

Le tableau démontre clairement que seuls les couples correspondant aux essais n° 13, 17 à 19, conduisent à une viscosité Brookfield™, mesurée à 25°C et à 10 tours / minute, comprise entre 4 000 et 10 000 mPa.s, ce qui est bien l'objectif visé par l'homme du métier. En outre, les essais n° 12 et n° 16 n'ont pas permis de déterminer de valeurs de viscosité, tant les formulations réalisées étaient épaissies.

**Tableau 2**

| Essai | AA | Brillances 20 ° | | | | | | | | |
|---|---|---|---|---|---|---|---|---|---|---|
| | / | ap 1J | | | ap 1M | | | ap 3M | | |
| | IN | m 1J | m 1M | m 3M | m 1J | m 1M | m 3M | m 1J | m 1M | m 3M |
| 1 | AA | 83 | 80 | 76 | 82 | 75 | 73 | 80 | 74 | 72 |
| 2 | AA | 83 | 82 | 80 | 82 | 80 | 78 | 81 | 78 | 76 |
| 3 | AA | 82 | 79 | 76 | 82 | 75 | 73 | 80 | 74 | 72 |
| 4 | AA | 83 | 82 | 80 | 82 | 80 | 78 | 81 | 79 | 77 |
| 5 | AA | 83 | 81 | 76 | 82 | 75 | 74 | 80 | 74 | 73 |
| 6 | AA | 83 | 80 | 76 | 81 | 74 | 76 | 80 | 74 | 75 |
| 7 | AA | 75 | 68 | 58 | 73 | 60 | 56 | 71 | 59 | 51 |
| **8** | AA | 82 | 77 | 75 | 81 | 77 | 74 | 80 | 76 | 73 |
| 9 | AA | 85 | 79 | 78 | 84 | 79 | 77 | 82 | 77 | 75 |
| 10 | AA | 85 | 78 | 78 | 84 | 78 | 77 | 82 | 76 | 75 |
| 11 | AA | 85 | 78 | 77 | 84 | 78 | 77 | 82 | 77 | 75 |
| 12 | AA | - | - | - | - | - | - | - | - | - |
| **13** | **IN** | **86** | **84** | **80** | **86** | **84** | **80** | **86** | **84** | **80** |
| 14 | AA | 83 | 79 | 77 | 81 | 78 | 75 | 80 | 75 | 74 |
| 15 | AA | 82 | 78 | 75 | 81 | 77 | 73 | 80 | 76 | 73 |
| 16 | AA | - | - | - | - | - | - | - | - | - |
| **17** | **IN** | **88** | **84** | **82** | **90** | **85** | **82** | **88** | **85** | **82** |
| **18** | **IN** | **88** | **84** | **82** | **90** | **85** | **82** | **90** | **85** | **83** |
| **19** | **IN** | **88** | **83** | **84** | **88** | **84** | **84** | **88** | **84** | **84** |

| | | | | | | | | | | |
|---|---|---|---|---|---|---|---|---|---|---|
| "ap 1J" signifie que la peinture a été appliquée 1 jour après avoir été formulée "m 1J" signifie que la mesure a été réalisée 1 jour après application de la peinture | | | | | | | | | | |

On note que seuls les essais correspondant à l'invention permettent de maintenir le niveau de brillant du film de peinture, quel que soit le moment d'application de la peinture, c'est-à-dire notamment après un temps de stockage égal à 3 mois.

## Revendications

1. Utilisation, dans une formulation de résine alkyde en phase aqueuse, comme agent améliorant la rétention du niveau de brillant du film sec résultant de l'application de ladite formulation, d'un couple dispersant / épaississant, **caractérisé en ce que** :
- le dispersant est un copolymère de l'acide (méth)acrylique avec un monomère oxyalkylé possédant une fonction polymérisable et terminé par l'hydrogène ou un groupement alkyle ayant de 1 à 4 atomes de carbone,
- l'épaississant est un épaississant associatif contenant au moins un groupement hydrophobe qui est un polystyrylphényle, préférentiellement choisi parmi le distyrylphényle, le tristyrylphényle et leurs mélanges, et qui est très préférentiellement le tristyrylphényle.

2. Utilisation selon la revendication 1, **caractérisée en ce que** ledit dispersant est un copolymère de l'acide acrylique avec un monomère oxyalkylé possédant une fonction polymérisable et terminé par l'hydrogène ou un groupement alkyle ayant de 1 à 4 atomes de carbone.

3. Utilisation selon l'une des revendications 1 ou 2, **caractérisée en ce que** pour ledit dispersant, le monomère oxyalkylé possède de 5 à 150, préférentiellement de 10 à 115 nombre d'oxyde d'éthylène et/ou de propylène.

4. Utilisation selon l'une des revendications 1 à 3, **caractérisée en ce que** pour ledit dispersant, le monomère oxyalkylé est terminé par l'hydrogène ou le groupement méthyle.

5. Utilisation selon l'une des revendications 1 à 4, **caractérisée en ce que** pour ledit dispersant, la fonction polymérisable du monomère oxyalkylé est la fonction méthacrylate.

6. Utilisation selon l'une des revendications 1 à 5, **caractérisée en ce que** ledit dispersant présente un poids moléculaire compris entre 15 000 g/mol et 110 000 g/mol, préférentiellement entre 20 000 g/mol et 60 000 g/mol.

7. Utilisation selon l'une des revendications 1 à 6, **caractérisée en ce que** l'épaississant associatif contenant au moins un groupement hydrophobe qui est le distyrylphényle, le tristyrylphényle ou un mélange de distyrylphényle et de tristyrylphényle, possède la formule (I) :
R - OX₁ - V - (OX₂ - W)ₐ - OX₃ - R, avec :
- V et W désignent une liaison uréthane,
- a désigne un nombre réel compris entre 1 et 5,
- OX₁, OX₂ et OX₃ désignent des groupements oxyalkylés, à base d'oxyde d'éthylène et/ou de propylène,
- R désigne un groupement hydrophobe qui est un polystyrylphényle, préférentiellement choisi parmi le distyrylphényle, le tristyrylphényle et leurs mélanges, et qui est très préférentiellement le tristyrylphényle.

8. Utilisation selon l'une des revendications 1 à 7, **caractérisée en ce que**, pour l'épaississant associatif, le nombre de motifs d'oxyde d'éthylène et/ou de propylène dans les groupements OX₁ et OX₃ est compris entre 2 et 100.

9. Utilisation selon l'une des revendications 1 à 8, **caractérisée en ce que**, pour l'épaississant associatif, le nombre de motifs d'oxyde d'éthylène et/ou de propylène pour le groupement OX₂ est compris entre 100 et 500.

10. Utilisation selon l'une des revendications 1 à 9, **caractérisée en ce que**, pour l'épaississant associatif, R désigne un groupement hydrophobe qui est le tristyrylphényle.

11. Utilisation selon l'une des revendications 1 à 10, **caractérisée en ce que** l'épaississant associatif présente un poids moléculaire compris entre 5 000 g/mol et 80 000 g/mol, préférentiellement entre 5 000 g/mol et 40 000 g/mol.

12. Utilisation selon l'une des revendications 1 à 11, **caractérisée en ce que** la résine alkyde est choisie parmi les résines polyesters, polyuréthannes, polyuréthannes-polyesters et leurs mélanges.

13. Utilisation selon l'une des revendications 1 à 12, **caractérisée en ce que** la formulation de résine alkyde en phase aqueuse présente une viscosité Brookfield™, mesurée à 25°C et à 10 tours / minute, comprise entre 4 000 et 10 000 mPa.s.

14. Utilisation selon l'une des revendications 1 à 13, **caractérisée en ce que** la formulation de résine alkyde en phase aqueuse est une peinture, une laque, un vernis ou une lasure.

15. Formulation de résine alkyde en phase aqueuse, contenant comme agent améliorant la rétention du niveau de brillant du film sec résultant de l'application de ladite formulation, un couple dispersant / épaississant, **caractérisé en ce que** :
- le dispersant est un copolymère de l'acide (méth)acrylique avec un monomère oxyalkylé possédant une fonction polymérisable et terminé par l'hydrogène ou un groupement alkyle ayant de 1 à 4 atomes de carbone,
- l'épaississant est un épaississant associatif contenant au moins un groupement hydrophobe qui est un polystyrylphényle, préférentiellement choisi parmi le distyrylphényle, le tristyrylphényle et leurs mélanges, et qui est très préférentiellement le tristyrylphényle.

16. Formulation de résine alkyde en phase aqueuse contenant un couple dispersant /épaississant selon la revendication 15, **caractérisée en ce que** ledit dispersant est un copolymère de l'acide acrylique avec un monomère oxyalkylé possédant une fonction polymérisable et terminé par l'hydrogène ou un groupement alkyle ayant de 1 à 4 atomes de carbone.

17. Formulation de résine alkyde en phase aqueuse contenant un couple dispersant /épaississant selon l'une des revendications 15 ou 16, **caractérisée en ce que** pour ledit dispersant, le monomère oxyalkylé possède de 5 à 150, préférentiellement de 10 à 115 nombre d'oxyde d'éthylène et/ou de propylène.

18. Formulation de résine alkyde en phase aqueuse contenant un couple dispersant /épaississant selon l'une des revendications 15 à 17, **caractérisée en ce que** pour ledit dispersant, le monomère oxyalkylé est terminé par l'hydrogène ou le groupement méthyle.

19. Formulation de résine alkyde en phase aqueuse contenant un couple dispersant /épaississant selon l'une des revendications 15 à 18, **caractérisée en ce que** pour ledit dispersant, la fonction polymérisable du monomère oxyalkylé est la fonction méthacrylate.

20. Formulation de résine alkyde en phase aqueuse contenant un couple dispersant /épaississant selon l'une des revendications 15 à 19, **caractérisée en ce que**, ledit dispersant présente un poids moléculaire compris entre 15 000 g/mol et 110 000 g/mol, préférentiellement entre 20 000 g/mol et 60 000 g/mol.

21. Formulation de résine alkyde en phase aqueuse contenant un couple dispersant /épaississant selon l'une des revendications 15 à 20, **caractérisée en ce que** ledit épaississant possède la formule (I) :
R - OX₁ - V - (OX₂ - W)ₐ - OX₃ - R, avec :
- V et W désignent une liaison uréthane,
- a désigne un nombre réel compris entre 1 et 5,
- OX₁, OX₂ et OX₃ désignent des groupements oxyalkylés, à base d'oxyde - d'éthylène et/ou de propylène,
- R désigne un groupement hydrophobe qui est un polystyrylphényle, préférentiellement choisi parmi le distyrylphényle, le tristyrylphényle et leurs mélanges, et qui est très préférentiellement le tristyrylphényle.

22. Formulation de résine alkyde en phase aqueuse contenant un couple dispersant /épaississant selon l'une des revendications 15 à 21, **caractérisée en ce que**, pour l'épaississant associatif, le nombre de motifs d'oxyde d'éthylène et/ou de propylène dans les groupements OX₁ et OX₃ est compris entre 2 et 100.

23. Formulation de résine alkyde en phase aqueuse contenant un couple dispersant /épaississant selon l'une des revendications 15 à 22, **caractérisée en ce que**, pour l'épaississant associatif, le nombre de motifs d'oxyde d'éthylène et/ou de propylène pour le groupement OX₂ est compris entre 100 et 500.

24. Formulation de résine alkyde en phase aqueuse contenant un couple dispersant /épaississant selon l'une des revendications 15 à 23, **caractérisée en ce que**, pour l'épaississant associatif, R désigne un groupement hydrophobe qui est le tristyrylphényle.

25. Formulation de résine alkyde en phase aqueuse contenant un couple dispersant /épaississant selon l'une des revendications 15 à 24, **caractérisée en ce que** l'épaississant associatif présente un poids moléculaire compris entre 5 000 g/mol et 80 000 g/mol, préférentiellement entre 5 000 g/mol et 40 000 g/mol.

26. Formulation de résine alkyde en phase aqueuse contenant un couple dispersant /épaississant selon l'une des revendications 15 à 25, **caractérisée en ce que** la résine alkyde est choisie parmi les résines polyesters, polyuréthanne, polyuréthannes-polyesters et leurs mélanges.

27. Formulation de résine alkyde en phase aqueuse contenant un couple dispersant /épaississant selon l'une des revendications 15 à 26, **caractérisée en ce qu'**elle présente une viscosité Brookfield™, mesurée à 25°C et à 10 tours / minute, comprise entre 4 000 et 10 000 mPa.s.

28. Formulation de résine alkyde en phase aqueuse contenant un couple dispersant /épaississant selon l'une des revendications 15 à 27, **caractérisée en ce qu'**elle est une peinture, une laque, un vernis ou une lasure.

## Claims

1. The use, in an alkide resin formulation in an aqueous phase, as an agent improving the brightness level retention of the dry film resulting from applying said formulation, of a dispersing agent/thickener pair, **characterized in that**:
- the dispersing agent is a copolymer of (meth)acrylic acid with an oxyalkylated monomer possessing a polymerizable function and terminated by hydrogen or an alkyl group having from 1 to 4 carbon atoms,
- the thickener is an associative thickener containing at least one hydrophobic group which is a polystyrylphenyl, preferentially chosen from among distyrylphenyl, tristyrylphenyl, and mixtures thereof, and which is very preferentially tristyrylphenyl.

2. A use according to claim 1, **characterized in that** said dispersing agent is a copolymer of acrylic acid with an oxyalkylated monomer possessing a polymerizable function and terminated by hydrogen or an alkyl group having from 1 to 4 carbon atoms.

3. A use according to one of the claims 1 or 2, **characterized in that** for said dispersing agent, the oxylakylated monomer possesses 5 to 150, preferentially 10 to 115 count of ethylene and/or propylene oxide units.

4. A use according to one of the claims 1 to 3, **characterized in that** for said dispersing agent, the oxylakylated monomer is terminated by hydrogen or the methyl group.

5. A use according to one of the claims 1 to 4, **characterized in that** for said dispersing agent, the polymerizable function of the oxyalkylated monomer is the methacrylate function.

6. A use according to one of the claims 1 to 5, **characterized in that** said dispersing agent exhibits a molecular weight between 15,000 g/mol and 110,000 g/mol, preferentially between 20,000 g/mol and 60,000 g/mol.

7. A use according to one of the claims 1 to 6, **characterized in that** the associative thickener containing at least one hydrophobic group which is distyrylphenyl, tristyrylphenyl or a mixture of distyrylphenyl and tristyrylphenyl, has the formula (I):
R - OX₁ - V - (OX₂ - W)ₐ - OX₃ - R, where:
- V and W designate a urethane bond,
- a designates a real number between 1 and 5,
- OX₁, OX₂ and OX₃ designate ethylene-based and/or propylene-based oxide oxyalkylated groups,
- R designates a hydrophobic group which is a polystyrylphenyl, preferentially chosen from among distyrylphenyl, tristyrylphenyl and mixtures thereof, and which is very preferentially tristyrylphenyl.

8. A use according to one of the claims 1 to 7, **characterized in that**, for the associative thickener, the number of ethylene and/or propylene oxide units in groups OX₁ and OX₃ is between 2 and 100.

9. A use according to one of the claims 1 to 8, **characterized in that**, for the associative thickener, the number of ethylene and/or propylene oxide units for the group OX₂ is between 100 and 500.

10. A use according to one of the claims 1 to 9, **characterized in that**, for the associative thickener, R designates a hydrophobic group which is tristyrylphenyl.

11. A use according to one of the claims 1 to 10, **characterized in that** the associative thickener exhibits a molecular weight between 5,000 g/mol and 80,000 g/mol, preferentially between 5,000 g/mol and 40,000 g/mol.

12. A use according to one of the claims 1 to 11, **characterized in that** the alkide resin is chosen from among polyester resins, polyurethanes, polyurethanes-polyester and mixtures thereof.

13. A use according to one of the claims 1 to 12, **characterized in that** the alkide resin formulation in an aqueous phase exhibits a Brookfield™ viscosity, measured at 25°C and at 10 revolutions/minute, of between 4,000 and 10,000 mPa.s.

14. A use according to one of the claims 1 to 13, **characterized in that** the alkide resin formulation in an aqueous phase is a paint, a lacquer, a varnish or a woodstain.

15. An alkide resin formulation in an aqueous phase, containing, as an agent improving the brightness level retention of the dry film resulting from the application of said formulation, a dispersing agent/thickener pair, **characterized in that**:
- the dispersing agent is a copolymer of (meth)acrylic acid with an oxyalkylated monomer possessing a polymerizable function and terminated by hydrogen or an alkyl group having from 1 to 4 carbon atoms,
- the thickener is an associative thickener containing at least one hydrophobic group which is a polystyrylphenyl, preferentially chosen from among distyrylphenyl, tristyrylphenyl, and mixtures thereof, and which is very preferentially tristyrylphenyl.

16. An alkide resin formulation in an aqueous phase containing a dispersing agent/thickener pair according to claim 15, **characterized in that** said dispersing agent is a copolymer of acrylic acid with an oxylakylated monomer possessing a polymerizable function and terminated by hydrogen or an alkyl group having 1 to 4 carbon atoms.

17. An alkide resin formulation in an aqueous phase containing a dispersing agent/thickener pair according to one of the claims 15 or 16, **characterized in that** for said dispersing agent, the oxylakylated monomer possesses 5 to 150, preferentially 10 to 115 count of ethylene and/or propylene oxide units.

18. An alkide resin formulation in an aqueous phase containing a dispersing agent/thickener pair according to one of the claims 15 to 17, **characterized in that** for said dispersing agent, the oxylakylated monomer is terminated by hydrogen or the methyl group.

19. An alkide resin formulation in an aqueous phase containing a dispersing agent/thickener pair according to one of the claims 15 to 18, **characterized in that** for said dispersing agent, the polymerizable function of the oxyalkylated monomer is the methacrylate function.

20. An alkide resin formulation in an aqueous phase containing a dispersing agent/thickener pair according to one of the claims 15 to 19, **characterized in that** said dispersing agent exhibits a molecular weight between 15,000 g/mol and 110,000 g/mol, preferentially between 20,000 g/mol and 60,000 g/mol.

21. An alkide resin formulation in an aqueous phase containing a dispersing agent/thickener pair according to one of the claims 15 to 20, **characterized in that** said thickener exhibits the formula (I):
R - OX₁ - V - (OX₂ - W)ₐ - OX₃ - R, where:
- V and W designate a urethane bond,
- a designates a real number between 1 and 5,
- OX₁, OX₂ and OX₃ designate ethylene-based and/or propylene-based oxide oxyalkylated groups,
- R designates a hydrophobic group which is a polystyrylphenyl, preferentially chosen from among distyrylphenyl, tristyrylphenyl and mixtures thereof, and which is very preferentially tristyrylphenyl.

22. An alkide resin formulation in an aqueous phase containing a dispersing agent/thickener pair according to one of the claims 15 to 21, **characterized in that**, for the associative thickener, the number of ethylene and/or propylene oxide units in the groups OX₁ and OX₃ is between 2 and 100.

23. An alkide resin formulation in an aqueous phase containing a dispersing agent/thickener pair according to one of the claims 15 to 22, **characterized in that**, for the associative thickener, the number of ethylene and/or propylene oxide units in the group OX₂ is between 100 and 500.

24. An alkide resin formulation in an aqueous phase containing a dispersing agent/thickener pair according to one of the claims 15 to 23, **characterized in that**, for the associative thickener, R designates a hydrophobic group which is tristyrylphenyl.

25. An alkide resin formulation in an aqueous phase containing a dispersing agent/thickener pair according to one of the claims 15 to 24, **characterized in that** the associative thickener exhibits a molecular weight between 5,000 g/mol and 80,000 g/mol, preferentially between 5,000 g/mol and 40,000 g/mol.

26. An alkide resin formulation in an aqueous phase containing a dispersing agent/thickener pair according to one of the claims 15 to 25, **characterized in that** the alkide resin is chosen from among polyester resins, polyurethanes, polyurethanes-polyester and mixtures thereof.

27. An alkide resin formulation in an aqueous phase containing a dispersing agent/thickener pair according to one of the claims 15 to 26, **characterized in that** it exhibits a Brookfield™ viscosity, measured at 25°C and 10 revolutions/minute, between 4,000 and 10,000 mPa.s.

28. An alkide resin formulation in an aqueous phase containing a dispersing agent/thickener pair according to one of the claims 15 to 27, **characterized in that** it is a paint, a lacquer, a varnish or a woodstain.
as the desired rheology.

## Patentansprüche

1. Verwendung eines Dispergiermittel/Verdickungsmittel-Systems, in einer Alkydharzformulierung in wässriger Phase, als Mittel zur Verbesserung des Glanzerhalts des trockenen Films, der bei Anwendung der Formulierung entsteht, **dadurch gekennzeichnet, dass**:
- das Dispergiermittel ein Copolymer von (Meth)acrylsäure mit einem alkoxylierten Monomer ist, das eine polymerisierbare funktionelle Gruppe besitzt und mit Wasserstoff oder einer Alkylgruppe mit 1 bis 4 Kohlenstoffatomen endet,
- das Verdickungsmittel ein assoziatives Verdickungsmittel ist, das mindestens eine hydrophobe Gruppe enthält, bei welcher es sich um ein Polystyrylphenyl handelt, das vorzugsweise aus Distyrylphenyl, Tristyrylphenyl und deren Mischungen ausgewählt ist, wobei es sich mit sehr großen Vorzug um Tristyrylphenyl handelt.

2. Verwendung nach Anspruch 1, **dadurch gekennzeichnet, dass** das Dispergiermittel ein Copolymer von Acrylsäure mit einem alkoxylierten Monomer ist, das eine polymerisierbare funktionelle Gruppe besitzt und mit Wasserstoff oder einer Alkylgruppe mit 1 bis 4 Kohlenstoffatomen endet.

3. Verwendung nach einem der Ansprüche 1 oder 2, **dadurch gekennzeichnet, dass** hinsichtlich des Dispergiermittels das alkoxylierte Monomer 5 bis 150, vorzugsweise 10 bis 115, als Anzahl an Ethylen- und/oder Propylenoxid besitzt.

4. Verwendung nach einem der Ansprüche 1 bis 3, **dadurch gekennzeichnet, dass** hinsichtlich des Dispergiermittels das alkoxylierte Monomer mit Wasserstoff oder mit einer Methylgruppe endet.

5. Verwendung nach einem der Ansprüche 1 bis 4, **dadurch gekennzeichnet, dass** hinsichtlich des Dispergiermittels die polymerisierbare funktionelle Gruppe des alkoxylierten Monomers eine funktionelle Methacrylatgruppe ist.

6. Verwendung nach einem der Ansprüche 1 bis 5, **dadurch gekennzeichnet, dass** das Dispergiermittel ein Molekulargewicht im Bereich von 15.000 g/mol bis 110.000 g/mol, vorzugsweise von 20.000 g/mol bis 60.000 g/mol, aufweist.

7. Verwendung nach einem der Ansprüche 1 bis 6, **dadurch gekennzeichnet, dass** das assoziative Verdickungsmittel, welches mindestens eine hydrophobe Gruppe enthält, bei der es sich um Distyrylphenyl, Tristyrylphenyl oder um eine Mischung aus Distyrylphenyl und Tristyrylphenyl handelt, die folgende Formel (I) besitzt:
R - OX₁ - V - (OX₂ - W)ₐ - OX₃ - R, wobei:
- V und W eine Urethanbindung bezeichnen,
- a eine reelle Zahl im Bereich von 1 bis 5 bezeichnet,
- OX₁, OX₂ und OX₃ alkoxylierte Gruppen bezeichnen, auf Grundlage von Ethylen- und/oder Propylenoxid,
- R eine hydrophobe Gruppe bezeichnet, bei welcher es sich um ein Polystyrylphenyl handelt, das vorzugsweise aus Distyrylphenyl, Tristyrylphenyl und deren Mischungen ausgewählt ist, wobei es sich mit sehr großen Vorzug um Tristyrylphenyl handelt.

8. Verwendung nach einem der Ansprüche 1 bis 7, **dadurch gekennzeichnet, dass** hinsichtlich des assoziativen Verdickungsmittels die Anzahl der Ethylen- und/oder Propylenoxidbausteine in den OX₁- und OX₃-Gruppen im Bereich von 2 bis 100 liegt.

9. Verwendung nach einem der Ansprüche 1 bis 8, **dadurch gekennzeichnet, dass** hinsichtlich des assoziativen Verdickungsmittels die Anzahl der Ethylen- und/oder Propylenoxidbausteine in der OX₂-Gruppe im Bereich von 100 bis 500 liegt.

10. Verwendung nach einem der Ansprüche 1 bis 9, **dadurch gekennzeichnet, dass** hinsichtlich des assoziativen Verdickungsmittels R eine hydrophobe Gruppe bezeichnet, bei der es sich um Tristyrylphenyl handelt.

11. Verwendung nach einem der Ansprüche 1 bis 10, **dadurch gekennzeichnet, dass** das assoziative Verdickungsmittel ein Molekulargewicht im Bereich von 5.000 g/mol bis 80.000 g/mol, vorzugsweise von 5.000 g/mol bis 40.000 g/mol, aufweist.

12. Verwendung nach einem der Ansprüche 1 bis 11, **dadurch gekennzeichnet, dass** das Alkylharz aus den Polyester-, Polyurethan-, Polyurethan-Polyester-Harzen und deren Mischungen ausgewählt ist.

13. Verwendung nach einem der Ansprüche 1 bis 12, **dadurch gekennzeichnet, dass** die Alkylharzformulierung in wässriger Phase eine Brookfield™-Viskosität, gemessen bei 25 °C und 10 Umdrehungen/Minute, im Bereich von 4.000 bis 10.000 mPa.s aufweist.

14. Verwendung nach einem der Ansprüche 1 bis 13, **dadurch gekennzeichnet, dass** es sich bei der Alkylharzformulierung in wässriger Phase um einen Farblack, einen Klarlack oder eine Lasur handelt.

15. Alkydharzformulierung in wässriger Phase, die als Mittel zur Verbesserung des Glanzerhalts des trockenen Films, der bei Anwendung der Formulierung entsteht, ein Dispergiermittel/Verdickungsmittel-System enthält, **dadurch gekennzeichnet, dass**:
- das Dispergiermittel ein Copolymer von (Meth)acrylsäure mit einem alkoxylierten Monomer ist, das eine polymerisierbare funktionelle Gruppe besitzt und mit Wasserstoff oder einer Alkylgruppe mit 1 bis 4 Kohlenstoffatomen endet,
- das Verdickungsmittel ein assoziatives Verdickungsmittel ist, das mindestens eine hydrophobe Gruppe enthält, bei welcher es sich um ein Polystyrylphenyl handelt, das vorzugsweise aus Distyrylphenyl, Tristyrylphenyl und deren Mischungen ausgewählt ist, wobei es sich mit sehr großen Vorzug um Tristyrylphenyl handelt.

16. Alkylharzformulierung in wässriger Phase, die ein Dispergiermittel/Verdickungsmittel-System enthält, nach Anspruch 15, **dadurch gekennzeichnet, dass** das Dispergiermittel ein Copolymer von Acrylsäure mit einem alkoxylierten Monomer ist, das eine polymerisierbare funktionelle Gruppe besitzt und mit Wasserstoff oder einer Alkylgruppe mit 1 bis 4 Kohlenstoffatomen endet.

17. Alkylharzformulierung in wässriger Phase, die ein Dispergiermittel/Verdickungsmittel-System enthält, nach einem der Ansprüche 15 oder 16, **dadurch gekennzeichnet, dass** hinsichtlich des Dispergiermittels das alkoxylierte Monomer 5 bis 150, vorzugsweise 10 bis 115, als Anzahl an Ethylen- und/oder Propylenoxid besitzt.

18. Alkylharzformulierung in wässriger Phase, die ein Dispergiermittel/Verdickungsmittel-System enthält, nach einem der Ansprüche 15 bis 17, **dadurch gekennzeichnet, dass** hinsichtlich des Dispergiermittels das alkoxylierte Monomer mit Wasserstoff oder mit einer Methylgruppe endet.

19. Alkylharzformulierung in wässriger Phase, die ein Dispergiermittel/Verdickungsmittel-System enthält, nach einem der Ansprüche 15 bis 18, **dadurch gekennzeichnet, dass** hinsichtlich des Dispergiermittels die polymerisierbare funktionelle Gruppe des alkoxylierten Monomers eine funktionelle Methacrylatgruppe ist.

20. Alkylharzformulierung in wässriger Phase, die ein Dispergiermittel/Verdickungsmittel-System enthält, nach einem der Ansprüche 15 bis 19, **dadurch gekennzeichnet, dass** das Dispergiermittel ein Molekulargewicht im Bereich von 15.000 g/mol bis 110.000 g/mol, vorzugsweise von 20.000 g/mol bis 60.000 g/mol, aufweist.

21. Alkylharzformulierung in wässriger Phase, die ein Dispergiermittel/Verdickungsmittel-System enthält, nach einem der Ansprüche 15 bis 20, **dadurch gekennzeichnet, dass** das Verdickungsmittel die folgende Formel (I) besitzt:
R - OX₁ - V - (OX₂ - W)ₐ - OX₃ - R, wobei:
- V und W eine Urethanbindung bezeichnen,
- a eine reelle Zahl im Bereich von 1 bis 5 bezeichnet,
- OX₁, OX₂ und OX₃ alkoxylierte Gruppen bezeichnen, auf Grundlage von Ethylen- und/oder Propylenoxid,
- R eine hydrophobe Gruppe bezeichnet, bei welcher es sich um ein Polystyrylphenyl handelt, das vorzugsweise aus Distyrylphenyl, Tristyrylphenyl und deren Mischungen ausgewählt ist, wobei es sich mit sehr großen Vorzug um Tristyrylphenyl handelt.

22. Alkylharzformulierung in wässriger Phase, die ein Dispergiermittel/Verdickungsmittel-System enthält, nach einem der Ansprüche 15 bis 21, **dadurch gekennzeichnet, dass** hinsichtlich des assoziativen Verdickungsmittels die Anzahl der Ethylen- und/oder Propylenoxidbausteine in den OX₁- und OX₃-Gruppen im Bereich von 2 bis 100 liegt.

23. Alkylharzformulierung in wässriger Phase, die ein Dispergiermittel/Verdickungsmittel-System enthält, nach einem der Ansprüche 15 bis 22, **dadurch gekennzeichnet, dass** hinsichtlich des assoziativen Verdickungsmittels die Anzahl der Ethylen- und/oder Propylenoxidbausteine in der OX₂-Gruppe im Bereich von 100 bis 500 liegt.

24. Alkylharzformulierung in wässriger Phase, die ein Dispergiermittel/Verdickungsmittel-System enthält, nach einem der Ansprüche 15 bis 23, **dadurch gekennzeichnet, dass** hinsichtlich des assoziativen Verdickungsmittels R eine hydrophobe Gruppe bezeichnet, bei der es sich um Tristyrylphenyl handelt.

25. Alkylharzformulierung in wässriger Phase, die ein Dispergiermittel/Verdickungsmittel-System enthält, nach einem der Ansprüche 15 bis 24, **dadurch gekennzeichnet, dass** das assoziative Verdickungsmittel ein Molekulargewicht im Bereich von 5.000 g/mol bis 80.000 g/mol, vorzugsweise von 5.000 g/mol bis 40.000 g/mol, aufweist.

26. Alkylharzformulierung in wässriger Phase, die ein Dispergiermittel/Verdickungsmittel-System enthält, nach einem der Ansprüche 15 bis 25, **dadurch gekennzeichnet, dass** das Alkylharz aus den Polyester-, Polyurethan-, Polyurethan-Polyester-Harzen und deren Mischungen ausgewählt ist.

27. Alkylharzformulierung in wässriger Phase, die ein Dispergiermittel/Verdickungsmittel-System enthält, nach einem der Ansprüche 15 bis 26, **dadurch gekennzeichnet, dass** sie eine Brookfield™-Viskosität, gemessen bei 25 °C und 10 Umdrehungen/Minute, im Bereich von 4.000 bis 10.000 mPa.s aufweist.

28. Alkylharzformulierung in wässriger Phase, die ein Dispergiermittel/Verdickungsmittel-System enthält, nach einem der Ansprüche 15 bis 27, **dadurch gekennzeichnet, dass** es sich um einen Farblack, einen Klarlack oder eine Lasur handelt.
